# EUROPEAN PATENT SPECIFICATION

(11) **EP 3 079 492 B1**
(45) Date of publication and mention of the grant of the patent: **07.08.2019**
(21) Application number: 14805280.6
(22) Date of filing: 28.11.2014
(51) Int. Cl.: A23G 9/32, A23L 5/00

(54) **USE OF AN ICE-CREAM WAFER COATING**
VERWENDUNG EINER EISWAFFELBESCHICHTUNG
UTILISATION D'UN REVÊTEMENT DE GAUFRETTES POUR CRÈME GLACÉE

(30) Priority: 10.12.2013 EP 13196536
(43) Date of publication of application: 19.10.2016
(73) Proprietor: Société des Produits Nestlé S.A., 1800 Vevey (CH)
(72) Inventor: CHANDRASEKARAN, Shantha Nalur, Leeds LS16 8LU (GB)
(74) Representative: Elleby, Gudrun
(86) International application number: PCT/EP2014/075984
(87) International publication number: WO 2015/086348

(56) References cited:
- EP-A1- 0 023 151
- EP-A1- 1 040 760
- WO-A1-97/02754
- WO-A1-2008/064962
- WO-A1-2009/024441
- WO-A1-2013/083392
- WO-A1-2015/045480
- GB-A- 528 377
- US-A- 2 671 027
- US-A- 3 223 532
- US-A- 4 086 370
- US-A- 6 017 571
- US-A1- 2011 262 599
- Stig Friberg, Kare Larsson, Johan Sjoblom: "Food Emulsions Fourth edition", 4 November 2003 (2003-11-04), CRC Press * page 50 *
- Anonymous: "Beeswax - Wikipedia", , 23 December 2012 (2012-12-23), XP055386294, Retrieved from the Internet: URL:https://en.wikipedia.org/w/index.php?t itle=Beeswax&oldid=529452864 [retrieved on 2017-06-28]
- Anonymous: "Sorbitan palmitate", , 21 September 2011 (2011-09-21), XP055386293, Retrieved from the Internet: URL:http://web.archive.org/web/20110921125 349/http://www.chemicalland21.com/lifescie nce/foco/SORBITAN%20PALMITATE.htm [retrieved on 2017-06-28]
- Anonymous: "Sorbitan stearate", , 5 April 2012 (2012-04-05), XP055386276, Retrieved from the Internet: URL:http://web.archive.org/web/20120405090 126/http://www.chemicalland21.com/lifescie nce/foco/SORBITAN%20STEARATE.htm [retrieved on 2017-06-28]
- Anonymous: "Soribtan Laurate", , 14 January 2010 (2010-01-14), XP055386279, Retrieved from the Internet: URL:http://web.archive.org/web/20100114180 231/http://www.chemicalland21.com/lifescie nce/foco/SORBITAN%20LAURATE.htm [retrieved on 2017-06-28]

## Description

### Field of Invention

The present invention relates to the use of a coating for coating an ice-cream wafer.

### Background of Invention

Ice-cream wafer coatings are used to coat ice-cream wafers. The ice-cream wafer coatings are manufactured to have for example; specific rheological properties, moisture barrier properties and drying properties.

Specific rheological properties of the ice-cream wafer coating ensures that the ice-cream wafer coating effectively adheres/stays on a surface of an ice-cream wafer in a uniform manner whilst avoiding running of the ice-cream wafer coating when applied to the surface of the ice-cream wafer.

Specific moisture barrier properties of the ice-cream wafer coating, ensures that the ice-cream wafer remains intact when an ice-cream product is applied to the ice-cream-wafer and that the ice-cream wafer does not absorb moisture from the ice-cream product or environment, which could damage the structure of the ice-cream wafer, shorten its shelf-life and compromise organoleptic properties of the ice-cream wafer such as its crispiness and flavour retention.

Specific drying properties of the ice-cream wafer coating are required to ensure that the ice-cream wafer coating sets and dries rapidly when applied to the ice-cream wafer. Specific drying properties of the ice-cream wafer coating are required to ensure that the ice-cream wafer coating does not crack during drying and/or application to the ice-cream wafer.

In order to achieve some of the aforementioned properties of the ice-cream wafer coating, the ice-cream wafer coating has a relatively high yield value of 12-20 dynes/cm², such a relatively high yield value of 12-20 dynes/cm² ensures that the ice-cream wafer coating effectively adheres/stay on the surface of the ice-cream wafer and dries accordingly, without running of the ice-cream wafer coating before the ice-cream product is applied. Furthermore to achieve desired rheological properties, a particle size of the ice-cream wafer coating is in the magnitude of 18-20 microns. In order to ensure that the particle size of the ice-cream wafer coating is in the magnitude of 18-20 microns requires specialised equipment for milling/grinding of the ice-cream wafer coating which slows down the manufacturing process thus decreasing throughput.

There is a need to overcome at least some of the aforementioned problems whilst providing ice-cream wafer coatings with desirable rheological properties, moisture barrier properties, drying/setting properties whilst maintaining desired organoleptic properties of the ice-cream wafer.

A known solution is to provide ice-cream wafer coatings comprising a fat and a triglyceride with a relatively high melting temperature, such as stearin. The ice-cream wafer coatings comprising the fat and the triglyceride with a relatively high melting temperature, such as stearin allows the ice-cream wafer coating to rapidly set when applied to the surface of the ice-cream wafer. However the use of ice-cream wafer coatings comprising the fat and the triglyceride with a relatively high melting temperature, such as stearin has many drawbacks. Such an ice-cream wafer coating has undesirable organoleptic properties. Such an ice-cream wafer coating has a waxy, thick texture since the fat and the triglyceride with a relatively high melting temperature, such as stearin; does not melt in the mouth readily when consumed. Such an ice-cream wafer coating sets too rapidly when applied to the surface of the ice-cream wafer causing a cracking of the ice-cream coating thus rendering the moisture barrier properties of the ice-cream wafer coating ineffective. Such an ice-cream wafer coating can only be applied at relatively high temperatures to ensure the coating is easily and evenly applied to the surface of the ice-cream wafer. Such an ice-cream wafer coating requires manufacturing and application conditions at relatively high temperatures to ensure that the coating does not adhere to an apparatus which would block apparatus components during a manufacture/application of the ice-cream coating. Such an ice-cream wafer coating is inherently bad for the health as it comprises relatively high amounts of the saturated fat, stearin. Such an ice-cream wafer coating is not an effective moisture barrier as the composition of fat and stearin does not form a continuous fat-stearin structure in the ice-cream wafer coating when set and adhered to the ice-cream wafer.

US 3223532 A discloses an emulsion coating with 5 to 60% water, wherein the emulsifier is used for emulsion creation. US 3223532 A uses the emulsifiers to help with emulsification or as thinning agent to reduce viscosity. US 3223532 A does not disclose the use of emulsifiers and/or additive having a melting point greater than 40°C.

WO 2008/064962 relates to a compound coating with reduced SFA level and with a snappiness similar to that of conventional compound coatings. The solutions described in WO 2008/064962 is a specific combination of a palm mid fraction and liquid oil which has a low SFA level.

EP0023151 discloses a composite frozen confection comprising ice confection in contact with a layer of fat-based confectionery composition comprising a suspension of flavouring and sweetening solids in a fat base, for example arranged to separate the ice confection from a dry edible confection such as wafer. EP0023151 discloses at page 7, lines 25-page 8, line 6, a coating composition comprising fat and an emulsifier which is lecithin. Lecithin is liquid at room temperature, and does therefore not have a melting point above 40°C.

WO2013083392 relates to an edible coating composition, particularly to an edible coating composition for providing moisture barrier. The coating composition in WO2013083392 comprises an additive chitosan soap complex. WO2013083392 does not disclose the claimed additives or emulsifiers of claim 1.

WO 2015/045480 relates to an oily food for inhibiting water migration in frozen confection. The oil food in WO 015/045480 has a yield value of 1.7 to 12 Pa at 40°C.

Methods for the manufacture of the ice-cream wafer coating comprising the fat and the triglyceride with a relatively high melting temperature, such as stearin are known. In such methods melted fat is provided to melted stearin during the manufacturing method. In such methods a provision of melted fat and melted stearin requires that the method is conducted at elevated temperature to ensure that the fat and stearin remain in the melted state. In such methods specialised equipment is required to ensure melting of fat and melting of the stearin. In such methods, the equipment and method need to be carried out at temperatures to avoid solidification of the components during the manufacturing process.

There is a need to provide a use of a coating for coating an ice-cream wafer which overcomes the aforementioned drawbacks.

### Summary of Invention

In an aspect the present invention discloses a use of a coating for coating an ice-cream. The use of a coating for coating the ice-cream wafer comprising based on weight%, providing fat in an amount of between 35 - 65%, providing an emulsifier and/or an additive, wherein a total amount of the emulsifier and/or the additive is between 0.1 - 5%, and wherein the emulsifier and/or the additive has a melting point greater than 40 °C, and wherein the emulsifier is at least one of:
- monoglycerides derived from plant and animal sources,
- monoglycerides derivatives selected from diacetyl tartaric esters of monoglycerides (DATEM), acetic acid esters of monoglycerides (ACETEM), succinic acid esters of monoglycerides (SMG), lactic acid esters of monoglycerides (LACTEM), citric acid esters of monoglycerides (CITREM), ethoxylated mono and diglycerides,
- polyglycerol esters selected from hexaglyceryl distearate, hexaglyceride monostearate and triglyceryl monostearate,
- sorbitan esters, sugar esters, or combinations thereof, and
wherein the additive is at least one of ethyl cellulose, waxes such as bees wax, carnauba wax, and a plant derived wax such as candedilla wax, berry wax and sunflower wax, or combinations thereof, and wherein
a particle size of the ice-cream wafer coating is between 30 - 45 and
a yield value of the ice-cream wafer coating is less than 1.2 N.m⁻², the yield value being measured using a Brookfield Viscometer (DV-I, DV-II, DV-II+, and DV-III Brookfield Viscometer) with the Casson calculation mode used according to the manufacturer's instructions.

### Brief Description of Figures

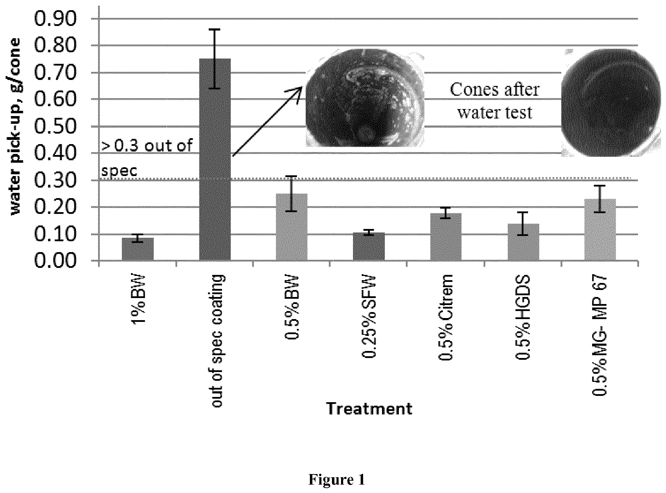

Figure 1 shows water test results of ice-cream wafers coated with ice-cream wafer coatings according to aspects of the present invention.

### Detailed Description

For a complete understanding of the present invention and the advantages thereof, reference is made to the following detailed description.

As used herein, ice-cream wafer refers to wafer(s) used in ice-cream applications or frozen confection application. The ice-cream wafer may be in the form of a cone such as waffle cones, cake cones (or wafer cones), pretzel cones and sugar cones. The ice-cream wafer may be in the form of wafer sheets that can be used in ice cream sandwiches. The ice-cream wafer may be in the form of a waffle. The ice-cream wafer may be in the form of cup. The ice-cream wafer may also refer to biscuit type products such as cookies which are used in ice-cream products.

As used herein, ice-cream wafer coating is a coating for an ice-cream wafer. The ice-cream wafer coating is intended to be applied to at least one surface the ice-cream wafer by applications known in the art such as spraying or coating. If the ice-cream wafer is a cone the coating is preferably applied to at least one surface inside of the ice-cream wafer cone by applications know in the art such as filling and sucking off the excess coating.

In a first aspect the present disclosure, not part of the invention, relates to an ice-cream wafer coating. The ice cream wafer coating comprises based on weight% fat in an amount of between 35 - 65% and an emulsifier and/or an additive, wherein a total amount of the emulsifier and/or the additive is between 0.1 - 5%.

The fat can be present in an amount based on weight% in an amount of preferably between 35 - 60 %. The fat is more preferably present based on weight% in an amount of between 45 - 55%.

The emulsifier and/or the additive is preferably present based on weight% in a total amount of between 0.25 - 3%. The emulsifier and/or the additive is more preferably present based on weight% in a total amount of between 0.25 - 1 %.

The fat can be any one of coconut fat, palm fat, cocoa butter fat, mango fat, shea fat, illepe fat, canola fat, peanut fat, sunflower fat, rapeseed fat, grape-seed fat, cotton-seed fat, soybean fat, corn fat or any combination thereof. It is to be appreciated that the term fat also encompasses fats that are solids or liquids at room temperature and the term fat is also understood to encompass oils and lipids.

The emulsifier and/or the additive preferably has a melting point greater than 40°C. It has been observed that when the emulsifier and/or the additive has a melting point lower than 40°C, the plasticisation of the fat is not so effective.

The emulsifier includes monoglycerides derived from plant and animal sources. The emulsifier includes monoglycerides derivatives such as diacetyl tartaric esters of monoglycerides (DATEM), acetic acid esters of monoglycerides (ACETEM), succinic acid esters of monoglycerides (succinylated monoglycerides (SMG)), lactic acid esters of monoglycerides (LACTEM), citric acid esters of monoglycerides (CITREM), ethoxylated mono and diglycerides. The emulsifiers include polyglycerol esters such as hexaglyceryl distearate, hexaglyceride monostearate and triglyceryl monostearate. The emulsifier includes sorbitan esters and sugar esters. Combinations of the above-mentioned emulsifiers may also be used.

The additive can be any one of ethyl cellulose, waxes, such as bees wax, carnauba wax, candelilla wax and plant derived wax such as berry wax and sunflower wax.

The emulsifier and/or the additive can be any one of the aforementioned or any combinations thereof.

The ice-cream wafer coating preferably has a particle size of below 60 microns. It is noted that where the ice-cream wafer coating has a particle size of greater than 60 microns a sandy/gritty texture is observed in the ice-cream wafer coating which should be avoided. The ice-cream wafer coating preferably has a particle size of between 30 - 45 microns.

The ice-cream wafer coating has a yield value of less than 1.2 N.m⁻². Yield value (also known as yield stress) is a measurable quantity similar to, but not dependent on, viscosity. It can be thought of as the initial resistance to flow under stress. The yield value and plastic viscosity are measured using a Brookfield Viscometer (DV-I, DV-II, DV-II+, and DV-III Brookfield Viscometer) with the Casson calculation mode used according to the manufacturer's instructions.

The ice-cream wafer coating can further comprise based on weight%, sugar in amount of between 20 - 60%, more preferably sugar in amount of between 30 - 50% and more preferably sugar in an amount between 35 - 45%.

The ice-cream wafer coating can further comprise based on weight%, cocoa powder in an amount of between 0 - 20%, more preferably cocoa powder in amount of between 5 - 15% and more preferably cocoa powder in an amount between 7.5 - 12.5%.

The ice-cream wafer coating can further comprise based on weight%, lecithin in amount of between 0 - 1.0% and more preferably lecithin in amount of between 0.5 - 1%. It has been found that when lecithin is used, lecithin lowers the plastic viscosity of the of the ice-cream wafer coating. This has the advantage that a flow of the ice-cream wafer coating is improved making it easier to pump and spray the ice-cream wafer coating.

The ice-cream wafer coating can further comprise based on weight%, milk powder or whey powder in an amount of between 0 - 30%, more preferably milk powder or whey powder in amount of between 5 - 25%, and more preferably milk powder or whey powder in an amount between 10 - 20%. A purpose of the milk powder or the whey powder is to provide a milk flavour to the ice-cream wafer coating.

The ice-cream wafer coating can further comprise a flavouring to make up the total weight% of the ice-cream wafer coating.

In a further aspect the present disclosure, not part of the invention, relates to a method for the manufacture of the ice-cream wafer coating.

The method for the manufacture of the ice-cream wafer coating comprises:
- providing the fat in an amount of between 35 - 65% in a liquid phase
- providing the emulsifier and/or the additive in a total amount of between 0.1 - 5% at any of a mixing, at conche or the end of conching before a standardisation stage, wherein the emulsifier and/or the additive is in the form of a liquid, when melted or a powder.

When the emulsifier and/or the additive have a relatively low melting point they are in the form of a liquid. When the emulsifier and/or the additive have a relatively high melting point they are in the form of a powder with particle sizes in the range of between 10 - 20 microns.

During the mixing stage the ingredients that make up the ice-cream wafer coating are blended in a mixer to form a mass with a dough-like consistency. The mass with the dough-like consistency is crushed to form refined mass-flakes. The mass with the dough-like consistency can be crushed by any means known in the art. However it is preferable that the mass with the dough-like consistency is crushed by rollers as rollers form consistently sized refined mass-flakes.

The conche or conching stage is a flavour development stage. During the conche or conching stage the aforementioned refined mass-flakes are subjected to constant agitation by a conching machine as known in the art. The conching machine agitates the refined mass-flakes by means of large paddles that agitate the refined mass-flakes by sweeping back and forth through a mass of the refined mass-flakes. The conch or conching stage can be carried out for a period of a few hours. The conche or conching stage ensures an even dispersion of flavours in the ensuing ice-cream wafer coating. The conche or conching stage reduces moisture in the ensuing ice-cream wafer coating. The conche or conching stage drives off any undesirable flavours in the ensuing ice-cream wafer coating. Such undesirable flavours can be for example acidic flavours that may result from the ingredients used in the manufacture of the ice-cream wafer coating.

During the standardisation stage, the mass from the conche or conching stage is either held in holding tanks for further use and then standardised or standardised right away from the Conche. During the standardisation stage the mass may be adjusted with by the addition of further fat and emulsifier and/or an at least one additive to obtain desired rheological properties in the ensuing ice-cream wafer coating.

The present inventors have found that the emulsifier and/or additive can be used melted or in the form of a powder and can be added to the mass at any of a mixing stage, at conche stage or even at the end of the conching stage before a standardisation stage. It was surprisingly found that the addition of the emulsifier and/or additive melted or in the form of a powder, at any of the above stages remains effective in its functionality irrespective of at which stage of the manufacturing process it is added. Thus the method enables ease of incorporation of the emulsifier and/or additive during the manufacture of the ice-cream wafer coating as the emulsifier and/or additive can be used as a dry ingredient.

### Examples

Ice-cream wafer coatings were manufactured according to Table I.

The ice-cream wafer coatings are similar to the currently used ice-cream wafer coatings (control) with the difference that the ice-cream wafer coating according to the present disclosure, not part of the invention, used the emulsifier and/or additive instead of stearin.

**Table I**

| Ingredients based on total weight% | Control coating | Coating according to invention |
|---|---|---|
| Sugar | 36.69 | 36.69 |
| Coconut oil (refined non-hydrogenated) | 35.2 | 35.2 |
| Palm Olein | 14.78 | 14.78 |
| Cocoa (10 - 12% fat) | 11.5 | 11.5 |
| Stearin (fractionated palm) | 0.9 | 0 |
| Lecithin | 0.93 | 0.5 |
| Emulsifier and/or additive | 0 | *Ranged between 0.1 - 5% |

| | | |
|---|---|---|
| *the differences were adjusted with sugar to add up to 100% | | |

The above ingredients are provided and batch mixed together. The at least one emulsifier and/or the at least one additive is provided at any of a mixing, at conche or the end of conching before a standardisation stage, wherein the at least one emulsifier and/or the at least one additive is in the form of a melted liquid or a powder.

Figure 1 shows water test results of ice-cream wafers that have been coated with the ice-cream wafer coatings according to the present invention. An effectiveness of the emulsifier (Citrem = citric acid esters of monoglycerides, HGDS = hexaglyceryl distearate and MG = monoglycerides, melting point (melting point of 67 °C) and/or additive (BW=beeswax, SFW=sunflower wax) enables the fat to rapidly plasticise. Figure 1 also shows a negative control coating (out of spec coating). The plasticising of the ice-cream wafer coating was analysed using a coverage test (a coating distribution of the ice-cream wafer coating on the ice-cream wafer) and a water test (water pick-up of the ice-cream wafer/cone). As noted figure 1 shows the water test results. Figure 1 also shows (inset) an appearance of the of the ice-cream wafer coating on the ice-cream wafer after the water test according to the present invention and the negative control. Initial water testing was performed with the emulsifier and additive as noted above. It is noted that emulsifier and/or additive are more effective for plasticising the fat and consequently the ice-cream wafer coating shows a good weight distribution and a reduced water absorption compared to the control. From figure 1 it is noted that the ice-cream wafer coating comprising the emulsifier and/or additive were effective in the water test and shown a water pick-up (water absorption) of less than 0.3g/cone (the acceptable range being up-to 0.3g/cone).

Figure 1 also shows (inset) an appearance of the of the ice-cream wafer coating on the ice-cream wafer after the water test. From the left hand side insert is clear to see that where an ice-cream wafer coating according to the negative control is applied to an ice-cream wafer, the ice-cream wafer coating has an uneven appearance and exhibits relatively high levels of water absorption. From the right hand side insert it is clear to see that where the ice-cream wafer coating is applied to the ice-cream wafer, the ice-cream wafer coating has an even appearance (distribution of the ice-cream wafer coating on the ice-cream wafer) and performs exceptionally well in the water test.

The particle sizes of the ice-cream wafer coating (negative control) were between 35 - 41 microns. The yield values of all the ice-cream wafer coating were<1 .2 N.m⁻².

The ice-cream wafer coatings (negative control & according to the present invention) were tested in a single lane with an ice-cream wafer coating spraying apparatus.

The ice-cream wafer coatings were sprayed onto ice-cream wafers to form a coated ice-cream wafer. The ice-cream wafer coatings sprayed well in an ice-cream wafer coating spraying apparatus with no blocked nozzles of the apparatus during a spraying trial of over 3 hours.

The ice-cream wafer coating sprayed uniformly with good adherence to the surface of the ice-cream wafer, in particular to inner surfaces of ice-cream wafers. The ice-cream wafer coating of the present disclosure, not part of the invention, when applied by spraying to the ice-cream wafer performed well in heat-shock tests. Ice-cream wafers coated with the ice-cream wafer coating of the present invention and when applied with an ice-cream product (i.e. frozen ice-cream product) also performed well in heat-shock tests.

The ice-cream wafers coated with the ice-cream wafer coating of the present disclosure, not part of the invention, showed no cracking/flaking of the ice-cream wafer coating when dry at room temperature or when frozen.

Following a 6 weeks test, the ice-cream wafers, coated with the ice-cream wafer coating of the present disclosure showed a better trend than the control coated ice-cream wafers with respect to being a moisture barrier. This demonstrates that the ice-cream wafers, coated with the ice-cream wafer coating of the present invention that exhibit a bigger particle size and lower yield value performed better that the ice-cream wafers, coated with the ice-cream wafer coating of the control.

The ice-cream wafers, coated with the ice-cream wafer coating of the present disclosure, not part of the invention, showed a good crispiness and organoleptic properties devoid of waxy mouth feel.

The emulsifier and/or additive enables the fat to rapidly plasticise in the ensuing ice-cream wafer coating and prevents any cracking of the ice-cream wafer coating when applied and dried on the ice-cream wafer.

The ice-cream wafer coating of the present disclosure, not part of the invention, eliminates the use of stearin which is known to be unhealthy.

The ice-cream wafer coatings of the present disclosure do not require the yield values and the small particle sizes required by the control ice-cream wafer coating thus circumventing the need for refining to obtain smaller particle sizes. Having a larger particle size as in the ice-cream wafer coating of the present invention increases the coating manufacture throughput and brings down the cost and energy expenditure where smaller particle sizes are made. It also eliminates the need for specialised equipment to produce low particle sizes.

The ice-cream wafer coating of the present disclosure, not part of the invention, provides a superior moisture barrier compared to the control coating irrespective of the rheological properties of the coating (i.e. yield value and particle size).

Having thus described the present invention and the advantages thereof, it should be appreciated that the various aspects and embodiments of the present invention as disclosed herein are merely illustrative of specific ways to make and use the invention.

The various aspects and embodiments of the present invention do not limit the scope of the invention when taken into consideration with the appended claims and the forgoing detailed description.

## Claims

1. Use of a coating for coating an ice-cream wafer comprising based on weight%
- fat in an amount of between 35 - 65%;
- an emulsifier and/or an additive, wherein a total amount of the emulsifier and/or the additive is between 0.1 - 5%, and wherein the emulsifier and/or the additive has a melting point greater than 40 °C, and wherein the emulsifier is at least one of:
- monoglycerides derived from plant and animal sources,
- monoglycerides derivatives selected from diacetyl tartaric esters of monoglycerides (DATEM), acetic acid esters of monoglycerides (ACETEM), succinic acid esters of monoglycerides (SMG), lactic acid esters of monoglycerides (LACTEM), citric acid esters of monoglycerides (CITREM), ethoxylated mono and diglycerides,
- polyglycerol esters selected from hexaglyceryl distearate, hexaglyceride monostearate and triglyceryl monostearate,
- sorbitan esters, sugar esters, or combinations thereof, and
wherein the additive is at least one of ethyl cellulose, waxes such as bees wax, carnauba wax, and a plant derived wax such as candedilla wax, berry wax and sunflower wax, or combinations thereof, and wherein
a particle size of the ice-cream wafer coating is between 30 - 45 µm and
a yield value of the ice-cream wafer coating is less than 1.2 N.m⁻², the yield value being measured using a Brookfield Viscometer (DV-I, DV-II, DV-II+, and DV-III Brookfield Viscometer) with the Casson calculation mode used according to the manufacturer's instructions.

2. Use of a coating according claim 1, wherein the fat is present in an amount of between 45 - 55%.

3. Use of a coating according to any one of the above claim, wherein the total amount of the emulsifier and/or the additive is between 0.25 - 3% and more preferably between 0.25 - 1%.

4. Use of a coating according to claim 1, wherein the fat is at least one of coconut, palm, cocoa butter, mango, shea, illepe, canola, peanut, sunflower, rapeseed, grape-seed, cotton-seed, soybean or corn fat or any combination thereof

5. Use of a coating according to any one of the above claims further comprising based on weight%, at least one sugar in amount of between 20 - 60%, more preferably in an amount of between 30 - 50% and more preferably in amount of between 35- 45% .

6. Use of a coating according to any one of the above claims further comprising based on weight%, cocoa powder in an amount of between 0 - 20%, more preferably in an amount of between 5 - 15% and more preferably in an amount of between 7.5 - 12.5%.

7. Use of a coating according to any one of the above claims further comprising based on weight%, lecithin in amount of between 0 - 1.0% and more preferably 0.5 - 1%.

8. Use of a coating according to any one of the above claims further comprising based on weight%, milk powder or whey powder in an amount of between 0 - 30%, more preferably 5 - 25% and more preferably 10 - 20%.

## Patentansprüche

1. Verwendung einer Beschichtung zum Beschichten einer Eiscremewaffel, die bezogen auf Gew.-% Folgendes umfasst:
- Fett in einer Menge von zwischen 35 und 65 %;
- einen Emulgator und/oder einen Zusatzstoff, wobei eine Gesamtmenge des Emulgators und/oder des Zusatzstoffs zwischen 0,1 und 5 % liegt und wobei der Emulgator und/oder der Zusatzstoff einen Schmelzpunkt von mehr als 40 °C aufweist, und wobei der Emulgator mindestens einer von Folgenden ist:
- Monoglyceride aus pflanzlichen und tierischen Quellen,
- Monoglyceridderivate, ausgewählt aus Diacetylweinsäureestern von Monoglyceriden (DATEM), Essigsäureestern von Monoglyceriden (ACETEM), Bernsteinsäureestern von Monoglyceriden (SMG), Milchsäureestern von Monoglyceriden (LACTEM), Zitronensäureestern von Monoglyceriden (CITREM), ethoxylierten Mono- und Diglyceriden,
- Polyglycerinester, ausgewählt aus Hexaglyceryldistearat, Hexaglyceridmonostearat und Triglycerylmonostearat,
- Sorbitanester, Zuckerester oder Kombinationen davon und
wobei der Zusatzstoff mindestens eines von Ethylcellulose, Wachsen wie beispielsweise Bienenwachs, Carnaubawachs und einem pflanzlichen Wachs wie beispielsweise Candedillawachs, Beerenwachs und Sonnenblumenwachs oder Kombinationen davon ist, und wobei
die Teilchengröße der Eiscremewaffelbeschichtung zwischen 30 bis 45 µm beträgt und
eine Fließgrenze der Eiscremewaffelbeschichtung weniger als 1,2 N.m⁻² beträgt, wobei die Fließgrenze mit einem Brookfield-Viskosimeter (DV-I, DV-II, DV-II+ und DV-III Brookfield-Viscometer) mit dem Casson-Berechnungsmodus gemäß den Anweisungen des Herstellers gemessen wird.

2. Verwendung einer Beschichtung nach Anspruch 1, wobei das Fett in einer Menge zwischen 45 und 55 % vorliegt.

3. Verwendung einer Beschichtung nach einem der vorstehenden Ansprüche, wobei die Gesamtmenge des Emulgators und/oder des Zusatzstoffs zwischen 0,25 bis 3 % und mehr bevorzugt zwischen 0,25 bis 1 % liegt.

4. Verwendung einer Beschichtung nach Anspruch 1, wobei das Fett mindestens eines von Kokosnuss-, Palm-, Kakaobutter-, Mango-, Shea-, IIIipe-, Canola-, Erdnuss-, Sonnenblumen-, Raps-, Traubenkern-, Baumwollsamen-, Sojabohnen- oder Maisfett oder eine beliebige Kombination davon ist.

5. Verwendung einer Beschichtung nach einem der vorstehenden Ansprüche, die bezogen auf Gew.-% ferner mindestens einen Zucker in einer Menge zwischen 20 bis 60 %, mehr bevorzugt in einer Menge zwischen 30 bis 50 % und mehr bevorzugt in einer Menge zwischen 35 bis 45 % umfasst.

6. Verwendung einer Beschichtung nach einem der vorstehenden Ansprüche, die bezogen auf Gew.-%, ferner Kakaopulver in einer Menge zwischen 0 bis 20 %, mehr bevorzugt in einer Menge zwischen 5 bis 15 % und mehr bevorzugt in einer Menge zwischen 7,5 bis 12,5 % umfasst.

7. Verwendung einer Beschichtung nach einem der vorstehenden Ansprüche, die bezogen auf Gew.-%, ferner Lecithin in einer Menge zwischen 0 bis 1,0 % und mehr bevorzugt 0,5 bis 1 % umfasst.

8. Verwendung einer Beschichtung nach einem der vorstehenden Ansprüche, die bezogen auf Gew.-%, ferner Milchpulver oder Molkepulver in einer Menge zwischen 0 bis 30 %, mehr bevorzugt 5 bis 25 % und mehr bevorzugt 10 bis 20 % umfasst.

## Revendications

1. Utilisation d'un enrobage pour enrober une gaufrette pour crème glacée comprenant sur une base en % en poids
- de la matière grasse en une quantité comprise entre 35 et 65 % ;
- un émulsifiant et/ou un additif, dans laquelle une quantité totale de l'émulsifiant et/ou de l'additif est comprise entre 0,1 et 5 %, et dans laquelle l'émulsifiant et/ou l'additif ont un point de fusion supérieur à 40 °C, et dans laquelle l'émulsifiant est au moins l'un parmi :
- des monoglycérides dérivés de sources végétales et animales,
- des dérivés de monoglycérides choisis parmi des esters diacétyltartriques de monoglycérides (DATEM), des esters d'acide acétique de monoglycérides (ACETEM), des esters d'acide succinique de monoglycérides (SMG), des esters d'acide lactique de monoglycérides (LACTEM), des esters d'acide citrique de monoglycérides (CITREM), des mono et diglycérides éthoxylés,
- des esters de polyglycérol choisis parmi le distéarate d'hexaglycéryle, le monostéarate d'hexaglycéride et le monostéarate de triglycéryle,
- des esters de sorbitan, des esters de sucre, ou des combinaisons de ceux-ci, et
dans laquelle l'additif est au moins l'un parmi l'éthylcellulose, des cires telles que la cire d'abeille, la cire de carnauba, et une cire dérivée de plante telle que la cire de candelilla, la cire de baie et la cire de tournesol, ou des combinaisons de ceux-ci, et dans laquelle
une taille de particules de l'enrobage de gaufrette pour crème glacée est comprise entre 30 et 45 µm et
une limite d'écoulement de l'enrobage de gaufrette pour crème glacée est inférieure à 1,2 N.m⁻², la limite d'écoulement étant mesurée en utilisant un viscosimètre Brookfield (viscosimètre Brookfield DV-I, DV-II, DV-II+ et DV-III) avec le mode de calcul de Casson selon les instructions du fabricant.

2. Utilisation d'un enrobage selon la revendication 1, dans laquelle la matière grasse est présente en une quantité comprise entre 45 et 55 %.

3. Utilisation d'un enrobage selon l'une quelconque revendication qui précède, dans laquelle la quantité totale de l'émulsifiant et/ou de l'additif est comprise entre 0,25 et 3 % et plus préférablement entre 0,25 et 1 %.

4. Utilisation d'un enrobage selon la revendication 1, dans laquelle la matière grasse est au moins l'une parmi une matière grasse de noix de coco, de palme, de beurre de cacao, de mangue, de karité, d'illipé, de canola, d'arachide, de tournesol, de colza, de pépins de raisin, de graines de coton, de soja ou de maïs ou n'importe quelle combinaison de celles-ci.

5. Utilisation d'un enrobage selon l'une quelconque des revendications précédentes comprenant en outre sur la base du % en poids, au moins un sucre en une quantité comprise entre 20 et 60 %, plus préférablement en une quantité comprise entre 30 et 50 % et plus préférablement en une quantité comprise entre 35 et 45 %.

6. Utilisation d'un enrobage selon l'une quelconque des revendications précédentes comprenant en outre sur la base du % en poids, de la poudre de cacao en une quantité comprise entre 0 et 20 %, plus préférablement en une quantité comprise entre 5 et 15 % et plus préférablement en une quantité comprise entre 7,5 et 12,5 %.

7. Utilisation d'un enrobage selon l'une quelconque des revendications précédentes comprenant en outre sur la base du % en poids, de la lécithine en une quantité comprise entre 0 et 1,0 % et plus préférablement 0,5 et 1 %.

8. Utilisation d'un enrobage selon l'une quelconque des revendications précédentes comprenant en outre sur la base du % en poids, du lait en poudre ou de la poudre de lactosérum en une quantité comprise entre 0 et 30 %, plus préférablement 5 et 25 % et plus préférablement 10 et 20 %.
